# EUROPÄISCHE PATENTSCHRIFT

(11) **EP 1 153 823 B1**
(45) Veröffentlichungstag und Bekanntmachung des Hinweises auf die Patenterteilung: **29.06.2005**
(21) Anmeldenummer: 01106869.9
(22) Anmeldetag: 20.03.2001
(51) Int. Cl.: B62D 25/08, B62D 25/16

(54) **Fahrzeugaufbau für einen Vorderwagen eines Kraftfahrzeugs**
Front body structure for a motor car
Structure avant de caisse de véhicule automobile

(30) Priorität: 11.05.2000 DE 10023193
(43) Veröffentlichungstag der Anmeldung: 14.11.2001
(73) Patentinhaber: Dr.Ing. h.c.F. Porsche Aktiengesellschaft, 70435 Stuttgart (DE)
(72) Erfinder: Tilsner, Michael, 75446 Wiernsheim (DE); Stahl, Rainer, 71706 Markgröningen (DE); Herntier, Matthias, 75449 Wurmberg (DE)

(56) Entgegenhaltungen:
- DE-A- 4 209 879
- DE-A- 4 417 380

## Beschreibung

Die Erfindung bezieht sich auf einen Fahrzeugaufbau für einen Vorderwagen eines Kraftfahrzeugs nach dem Oberbegriffs des Anspruchs 1.

Aus der DE 42 09 879 A1 ist eine vordere Karosseriestruktur eines Fahrzeugs bekannt, die als Rahmen ausgebildet ist und Träger umfasst, welche mit der A-Säule des Fahrzeugs verbunden sind und sich in Fahrtrichtung nach vorne erstrecken. Mit dem Rahmen ist vorderseitig ein querverlaufender Frontrahmen verbunden, wobei an einem Träger des Rahmens ein Kotflügel befestigbar ist.

Aufgabe der Erfindung ist es, einen vorderen Fahrzeugaufbau eines Kraftfahrzeuges zu schaffen, der eine Trägerstruktur aufweist, die zum einen eine einfache Kotflügelbefestigung sowie eine Aufnahme von unterschiedlichen Frontklappen und zum anderen einen stabilen Vorderwagen gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass die beiden Kotflügelbänke des Vorderwagens mit der Trägerstruktur in einfacher Weise beispielsweise über Befestigungsschrauben verbindbar ist. Es besteht somit die einfache Möglichkeit, unterschiedlich ausgeführte Kotflügelbänke im Vorderwagen zu verwenden, um die Frontklappe mit ihren Anschlusskanten je nach herzustellendem Fahrzeugtyp zu gestalten. Das heißt die Fuge zwischen der Frontklappe und dem Kotflügel kann beliebig angeordnet werden. Hierzu weist die Trägerstruktur jeweils ein mit dem Längsträger verbundene T-förmige Profilstütze auf, die mit einem aufwärtsgerichteten Fußsteg endseitig an der Kotflügelbank befestigt ist, wobei ein nach außen gerichteter querliegender Mittelsteg endseitig mit einem Kotflügelträger verbunden ist.

Die Kotflügelbänke beider Seiten sind in Fahrtrichtung gesehen V-förmig und zum Trägerprofil unter einem spitzen Winkel angeordnet, wobei der Kotflügel beabstandet zum innenliegenden Längsträger angeordnet wird.

Die am Längsträger gehaltene Profilstütze ist stirnseitig der Kotflügelbank angeordnet und mit dieser verbunden, wobei der Fußsteg der Profilstütze mit einem unteren Ende auf dem Längsträger aufsteht und sich etwa vertikal zu einem Verbindungselement der Kotflügelbank erstreckt, die an der A-Säule endet. Der Mittelsteg der Profilstütze ist etwa horizontal und quergerichtet zur Fahrzeugaußenseite erstreckend vorgesehen und mit seinem freien Ende mit dem Kotflügelträger verbunden. Durch diese Ausbildung der Trägerstruktur wird ein stabiler Vorderwagen geschaffen, der neben einer gut zugänglichen und einfachen Möglichkeit einer Befestigung des Kotflügels auch noch eine Befestigung eines Frontendteils erlaubt. Die Trägerstruktur ist unmittelbar an der A-Säule des Fahrzeugs abgestützt, so dass bei einem Frontcrash im Zusammenspiel mit dem Längsträger zudem eine energieabsorbierende Vorderwagenstruktur geschaffen wird.

Die Kotflügelbank besteht vorzugsweise aus einem profilierten Ober- und Unterteil, die miteinander verbunden sind, wobei das Oberteil eine profilierte Kotflügelabstellung aufnimmt und mit dieser verbunden ist und am Oberteil die Motorhaube aufliegend gehalten wird. Zur Verbindung der Kotflügelbank mit der Profilstütze und mit dem Kotflügelträger sind Verbindungselemente aus U-förmigen und/oder winkelförmigen Blechelementen vorgesehen. Zu dieser Befestigung können die Verbindungselemente unterschiedlich ausgeführt sein, damit die entsprechenden Befestigungspunkte zwischen der Kotflügelbank und der Profilstütze und dem Kotflügelträger miteinander korrespondierend gestaltet werden können.

Ausführungsbeispiele der Erfindung sind in den Zeichnungen dargestellt und werden im Folgenden näher beschrieben:

Es zeigen:
- Fig. 1: eine schaubildliche Darstellung einer Vorderwagenstruktur, wobei nur die linke Seite des Vorderwagens in Bezug auf die Fahrtrichtung gezeigt ist,
- Fig. 2: eine schaubildliche Darstellung der Vorderwagenstruktur gemäß Fig. 1 bei noch nicht befestigter Kotflügelbank,
- Fig. 3: einen Vertikalschnitt durch ein hinteres Verbindungselement zwischen Kotflügelträger und Kotflügelbank,
- Fig. 4: einen Vertikalschnitt durch ein vorderes Verbindungselement zwischen der Profilstütze und Kotflügelbank und
- Fig. 5: ein weiteres Ausführungsbeispiel einer vorderen Befestigung zwischen der Profilstütze und der Kotflügelbank.

Der Vorderwagen 1 eines Kraftfahrzeuges umfasst im wesentlichen eine Trägerstruktur 2, die in jeder Fahrzeugseite mit einem Längsträger 3 und einer A-Säule 4 des Fahrzeugaufbaus verbunden ist. Die A-Säulen 4 sind mit einer Seitenwand 5 und einer Stirnwand des Fahrzeugs verbunden. Mit der Trägerstruktur 2 ist seitlich ein Kotflügel 6 und frontseitig ein quer angeordnetes Frontendteil 7 vorgesehen, das nicht näher gezeigt ist.

Die Trägerstruktur 2 umfasst jeweils eine mit dem Längsträger 3 verbundene T-förmige Profilstütze 8, sowie eine Kotflügelbank 9 und einen Kotflügelträger 10 mit einem Abstützträger 11.

Die Profilstütze 8 ist in Bezug auf die Fahrtrichtung F am vorderen Ende 12 des Längsträgers 3 befestigt und die Kotflügelbank 9 und der Kotflügellängsträger 10 erstrecken sich von dieser Profilstütze 8 entgegen der Fahrtrichtung F zur A-Säule 4 und zumindest der Kotflügellängsträger 10 ist mit dieser A-Säule 4 verbunden.

Die Profilstütze 8 weist einen sich vom Längsträger 3 vertikal nach oben erstreckenden Fußsteg 13 sowie einen sich vom Längsträger 3 quer nach außen und etwa horizontal ausgerichteten Mittensteg 14 auf. Am freien oberen Ende des Fußstegs 13 ist die Kotflügelbank 9 über ein Verbindungselement 15 befestigt. Der Kotflügelträger 10 ist mit seinem freien Ende endseitig am Mittensteg 14 verbunden. Nahe der A-Säule 4 ist die Kotflügelbank 9 über ein weiteres Verbindungselement 16; 16a am Kotflügelträger 10 gehalten und über Befestigungsschrauben 17 festgesetzt.

Die Kotflügelbänke 9 beider Fahrzeugseiten verlaufen von oben in Fahrtrichtung Z gesehen in Fahrtrichtung V-förmig zueinander und desweiteren ist die Kotflügelbank 9 ist zum Kotflügelträger 10 unter einem spitzen Winkel α angeordnet, wobei die Kotflügelbank 9 oberhalb des Kotflügelträgers 10 liegt, der aufgrund der T-Profilstütze 8 im Abstand a zum Längsträger 3 zur Fahrzeugaußenseite hin gerückt angeordnet ist.

Die Kotflügelbank 9 besteht vorzugsweise aus einem profiliertem Oberteil 9a und einem profiliertem Unterteil 9b, die über die Länge eine unterschiedliche Querschnittsform aufweisen können.

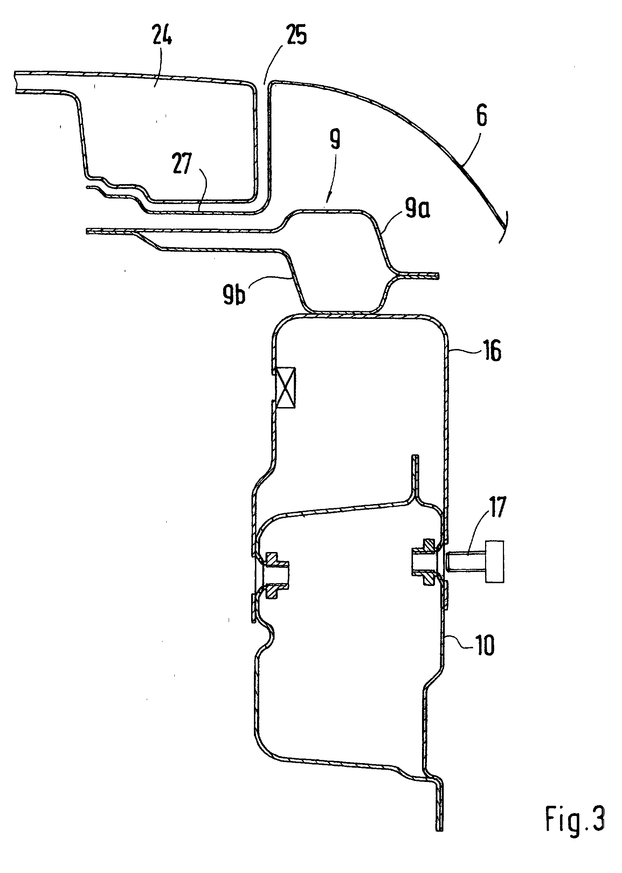

Wie Fig. 3 näher zeigt, besteht das hinten liegende Verbindungselement 16 aus einem U-förmigen Profil, dessen Schenkel den Kotflügelträger 10 von beiden Seiten übergreifen und über Schraubverbindungen mit diesem verbunden sind.

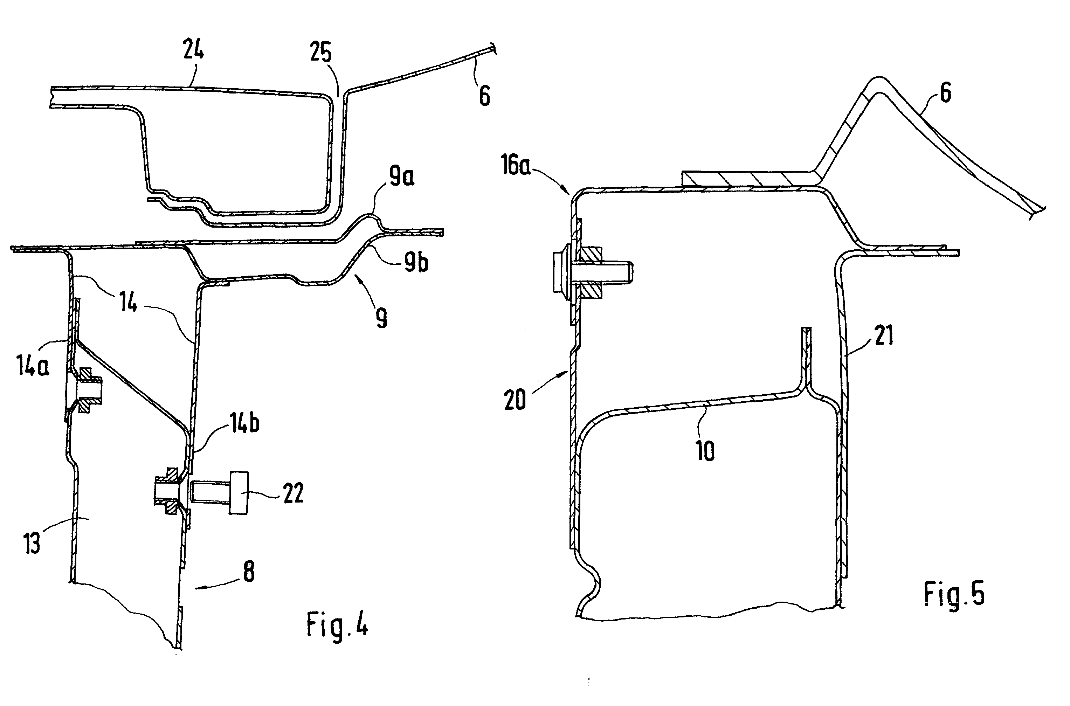

Wie Fig. 4 näher zeigt, besteht das vorneliegende Verbindungselement 15 aus einem das freie Ende des Fußsteges 13 der Profilstütze 8 von zwei Seiten übergreifende Verstärkungsbleche 14a, 14b, die über Schraubmittel mit der Profilstütze 8 verbunden werden.

Nach einer weiteren Ausführung gemäß Fig. 5 kann die hintere Verbindung 16a der Kotflügelbank 9 über ein aus zwei zusammengesetzten Winkelblechen 20, 21 bestehendem Profil gebildet sein, die den Kotflügelträger 10 von zwei Seiten übergreifen. Mit dem Winkelblech 20 ist der Kotflügel 6 stegseitig verbunden.

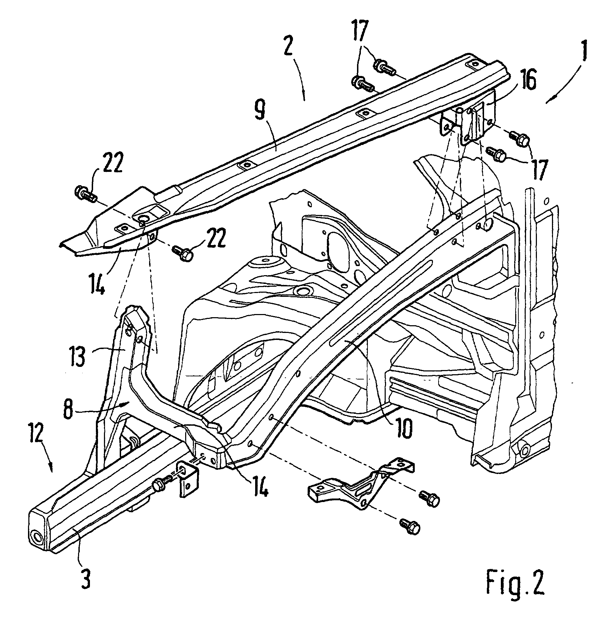

Wie in Fig. 2 näher zu erkennen ist, wird die Kotflügelbank 9 über die Verbindungselemente 14, 16; 16a mit der Trägerstruktur 2 über Schraubmittel 17, 22 verbunden. Damit die Kotflügelbank 9 durch eine andere Kotflügelbank anderer Konfigurationen ersetzbar ist, die eine andere Frontklappe 24 für ein abgeändertes Fahrzeug einsetzbar ist. Das heisst die V-förmige Fuge 25 zwischen der Frontklappe 24 und dem Kotflügel 6 kann durch den Austausch der Kotflügelbank 9 einen anderen Verlauf aufweisen.

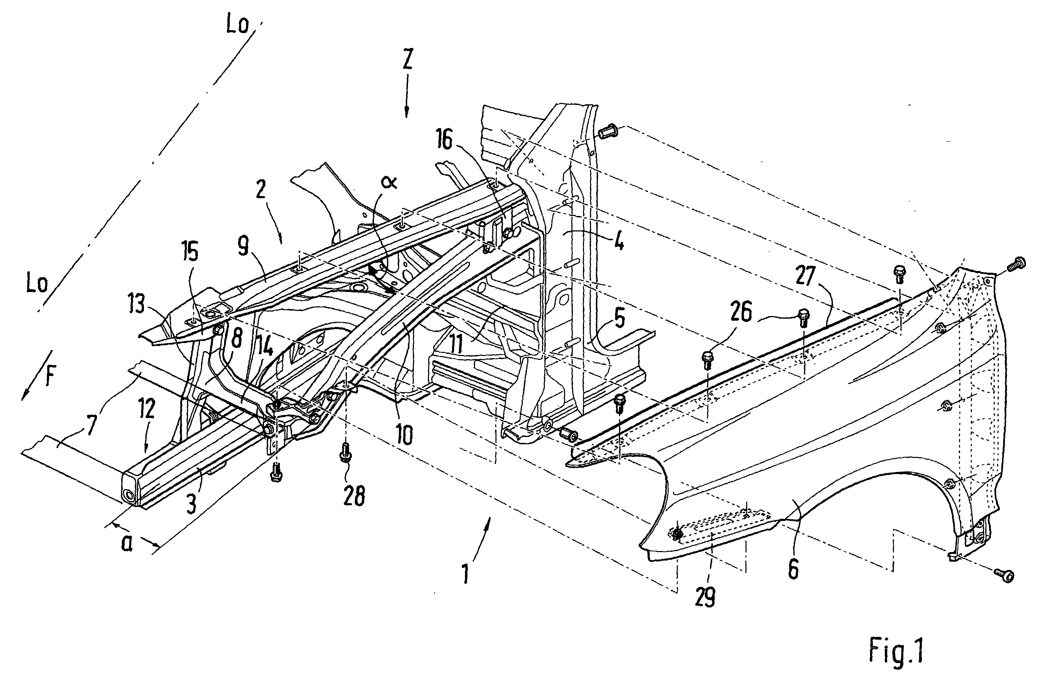

Der Kotflügel 6 wird an der Kotflügelbank 9 mit seiner oberen-Kotflügelabstellung 27 mittels Schrauben 26 befestigt, wie Fig. 1 näher zeigt. Eine unterseitige Befestigung des Kotflügels 6 erfolgt zumindest über Schrauben 28 und einem Verbindungselement 29 am Kotflügelträger 10.

## Patentansprüche

1. Fahrzeugaufbau für einen Vorderwagen eines Kraftfahrzeuges mit seitlich verlaufenden Fahrzeuglängsträgern (3) sowie eine daran befestigte Trägerstruktur (2), die mit einer A-Säule (4) des Fahrzeugaufbaus verbindbar ist, wobei an einem Arm der Trägerstruktur (2) ein Kotflügel (6) befestigt wird, **dadurch gekennzeichnet, dass** die Trägerstruktur (2) jeweils eine am vorderen Ende (12) mit dem Längsträger (3) verbundene T-förmige Profilstütze (8) aufweist, die mit einem aufwärts gerichteten Fußsteg (13) endseitig mit einer Kotflügelbank (9) und die mit einem nach außen gerichteten querliegenden Mittensteg (14) endseitig mit einem Kotflügelträger (10) verbunden ist.

2. Fahrzeugaufbau nach Anspruch 1, **dadurch gekennzeichnet, dass** die Kotflügelbank (9) beider Seiten - in Bezug auf die Fahrtrichtung F- V-förmig und zum Trägerprofil (10) unter einem spitzen Winkel (α) nach vorne verläuft, wobei der Kotflügelträger (10) mit dem Maß (a) beabstandet zum innenliegenden Längsträger (3) angeordnet ist.

3. Fahrzeugaufbau nach den Ansprüchen 1 oder 2, **dadurch gekennzeichnet, dass** der Fußsteg (13) der Profilstütze (8) mit einem unteren Ende auf dem Längsträger (3) aufstehend verbunden ist und sich etwa vertikal zu einem Verbindungselement (15) der Kotflügelbank (9) erstreckt, die an der A-Säule (4) endet.

4. Fahrzeugaufbau nach den Ansprüchen 1, 2 oder 3, **dadurch gekennzeichnet, dass** Mittensteg (14) der Profilstütze (8) sich etwa horizontal und quergerichtet zur Fahrzeugaußenseite erstreckt, und mit seinem freien Ende mit dem Kotflügelträger (10) verbunden ist.

5. Fahrzeugaufbau nach den Ansprüchen 1, 2, 3 oder 4, **dadurch gekennzeichnet, dass** die Kotflügelbank (9) aus einem profilierten Ober- und Unterteil (9a, 9b) besteht, die miteinander verbunden sind, wobei das Oberteil (9a) eine profilierte Kotflügelabstellung (27) aufnimmt, und mit dieser verbunden ist und in welcher ein Rand einer Motorhaube (24) aufliegend gehalten wird.

6. Fahrzeugaufbau nach einem oder mehreren der vorhergehenden Ansprüche, **dadurch gekennzeichnet, dass** die Kotflügelbank (9) an Ihrem der A-Säule (4) zugerichteten freien Ende ein Verbindungselement (16; 16a) aufweist, welches aus einem U-Profil besteht , das mit seinen Schenkeln den Kotflügelträger (10) von oben her übergreift und an diesen befestigt ist.

7. Fahrzeugaufbau nach einem oder mehreren der vorhergehenden Ansprüche, **dadurch gekennzeichnet, dass** das Verbindungselement (16a) für die Kotflügelbank (9) am Kotflügelträger (10) an ihrem der A-Säule (4) zugerichteten freien Ende aus einem U-förmigen Profilteil besteht, das mit einer inneren winkelförmigen Verstärkung (20) und einem außen liegenden Schließteil (21) am Kotflügelträger (10) gehalten wird.

8. Fahrzeugaufbau nach einem oder mehreren der vorhergehenden Ansprüche, **dadurch gekennzeichnet, dass** die Befestigung der Kotflügelbank (9) am freien hochstehenden Ende des Fußsteges (13) der Profilstütze (8) über ein Verstärkungsbleche (14a; 14b) aufweisendes Verstärkungselement (14) erfolgt, das zumindest beidseitig des Fußstegs (13) angeordnet um mit der Kotflügelbank (9) verbunden ist.

9. Fahrzeugaufbau nach einem oder mehreren der vorhergehenden Ansprüche, **dadurch gekennzeichnet, dass** die Kotflügelbank (9) mit der Abstellung (27) des Kotflügels (6) oberseitig der Kotflügelbank (9) sowie mit einem vorderen Bereich an der Profilstütze (8) und mit einem hinteren Bereich am Kotflügelträger (10) verbindbar ist.

## Claims

1. A front body structure for a motor vehicle, comprising laterally extending vehicle longitudinal members (3) and a supporting structure (2) which is fixed thereto and is connectable to an A-pillar (4) of the body structure, wherein a wing (6) is fixed to an arm of the supporting structure (2), **characterised in that** the supporting structure (2) has a T-shaped profiled bracket (8) which is connected to the longitudinal member (3) at the front end (12) thereof and is connected by an upwardly extending foot portion (13) to the end of a wing seat (9) and by an outwardly extending, transverse middle portion (14) to the end of a wing support (10).

2. A body structure according to claim 1, **characterised in that** the wing seats (9) of the two sides extend in the shape of a V, relative to the direction of travel F, and extend forwards at an acute angle (α) to the supporting section (10), the wing support (10) being arranged spaced apart from the inner longitudinal member (3) by the amount (a).

3. A body structure according to claim 1 or 2, **characterised in that** the foot portion (13) of the profiled bracket (8) is connected by its lower end so as to stand upright on the longitudinal member (3) and extends substantially vertically as far as a connecting element (15) of the wing seat (9), which ends at the A-pillar (4).

4. A body structure according to claim 1, 2 or 3, **characterised in that** the middle portion (14) of the profiled bracket (8) extends substantially horizontally and transversely towards the outside of the vehicle and is connected by its free end to the wing support (10).

5. A body structure according to claim 1, 2, 3 or 4, **characterised in that** the wing seat (9) comprises a profiled upper part and lower part (9a, 9b) which are connected together, the upper part (9a) receiving and being connected to a profiled wing shoulder (27) in which an edge of a bonnet (24) is held supported.

6. A body structure according to one or more of the preceding claims, **characterised in that** the wing seat (9) has, at its free end facing the A-pillar (4), a connecting element (16; 16a) comprising a U-section, the arms of which engage over the wing support (10) from above and are fixed thereto.

7. A body structure according to one or more of the preceding claims, **characterised in that** the connecting element (16a) for connecting the wing seat (9), at its end facing the A-pillar (4), to the wing support (10) comprises a U-shaped sectional part which is held on the wing support (10) by an inner angular reinforcement (20) and an outer closing part (21).

8. A body structure according to one or more of the preceding claims, **characterised in that** the wing seat (9) is fixed to the free, upright end of the foot portion (13) of the profiled bracket (8) by a reinforcing element (14) having reinforcing plates (14a; 14b), the reinforcing element (14) being arranged at least on either side of the foot portion (13) and being connected to the wing seat (9).

9. A body structure according to one or more of the preceding claims, **characterised in that** the wing seat (9) is connectable to the shoulder (27) of the wing (6) on the upper side of the wing seat (9) and to a front region of the profiled bracket (8) and to a rear region of the wing support (10).

## Revendications

1. Carrosserie de véhicule pour l'avant d'un véhicule automobile comportant des longerons (3) s'étendant longitudinalement ainsi qu'une structure à poutres (2) fixée sur ceux-ci, laquelle peut être reliée à un montant A (4) de la carrosserie (3) du véhicule, une aile (6) étant fixée sur un bras de la structure à poutres (2), **caractérisée en ce que** la structure à poutres (2) comporte un appui profilé (8) en T relié à l'extrémité avant (12), au longeron (3), lequel appui est relié, côté extrémité, à un banc d'aile (9), par un pied (13) dirigé vers le haut, et, côté extrémité, à un support d'aile (10), par une barrette centrale (14) s'étendant transversalement et dirigée vers l'intérieur,.

2. Carrosserie de véhicule selon la revendication 1, **caractérisé en ce que** le banc d'aile (9) s'étend vers l'avant des deux côtés - par rapport au sens de marche (F) - en forme de V et par rapport au profilé de support (10) suivant un angle aigu (α), le support d'aile (10) étant disposé à la distance (a) du longeron (3) situé à l'intérieur.

3. Carrosserie de véhicule selon les revendications 1 ou 2, **caractérisée en ce que** la barrette de pied (13) de l'appui profilé (8) est reliée à une extrémité inférieure, en se tenant sur le longeron (3), et s'étend à peu près verticalement vers un élément de liaison (15) du banc d'aile (9) qui se termine sur le montant A (4).

4. Carrosserie de véhicule selon les revendications 1, 2 ou 3, **caractérisée en ce que** la barrette centrale (14) de l'appui profilé (8) s'étend à peu près horizontalement et orientée transversalement par rapport au côté extérieur du véhicule, et est reliée par son extrémité libre au support d'aile (10).

5. Carrosserie de véhicule selon les revendications 1, 2, 3 ou 4, **caractérisée en ce que** le banc d'aile (9) est constitué d'une partie supérieure et d'une partie inférieure profilées (9a, 9b) qui sont reliées entre elles, la partie supérieure (9a) recevant un gradin profilé (27) de l'aile et étant reliée à celui-ci, et un capot du moteur (24) étant maintenu soutenu dans un bord de ce gradin.

6. Carrosserie de véhicule selon une ou plusieurs des revendications précédentes, **caractérisée en ce que** le banc d'aile (9) comporte, à son extrémité libre tournée vers le montant A (4), un élément de liaison (16 ; 16a) qui est constitué d'un profilé en U lequel passe depuis le haut, par ses branches, sur le support d'aile (10) et est fixé à celui-ci.

7. Carrosserie de véhicule selon une ou plusieurs des revendications précédentes, **caractérisée en ce que** l'élément de liaison (16a) pour le banc d'aile (9) sur le support d'aile (10) est constitué, à son extrémité libre tournée vers le montant A (4), d'une partie de profilé en U qui est maintenue sur le support d'aile (10), par un renfort (20) intérieur en forme d'équerre et une pièce de fermeture (21) située à l'extérieur.

8. Carrosserie de véhicule selon une ou plusieurs des revendications précédentes, **caractérisée en ce que** la fixation du banc d'aile (9) à l'extrémité libre se tenant verticalement de la barrette de pied (13) de l'appui profilé (8), s'effectue par un élément de renfort (14) comportant des tôles de renfort (14a ; 14b), lequel est disposé au moins des deux côtés de la barrette de pied (13) et est relié au banc d'aile (9).

9. Carrosserie de véhicule selon une ou plusieurs des revendications précédentes, **caractérisée en ce que** le banc d'aile (9) peut être relié au gradin (27) de l'aile (6) sur le côté supérieur du banc d'aile (9), ainsi qu'à une zone avant de l'appui profilé (8) et à une zone arrière du support d'aile (10).
